# EUROPEAN PATENT APPLICATION

(11) **EP 3 187 405 A1**
(43) Date of publication of application: **05.07.2017**
(21) Application number: 16154885.4
(22) Date of filing: 09.02.2016
(51) Int. Cl.: B62K 23/00, B60K 23/08

(54) **TORQUE SPLIT SYSTEM FOR TWO WHEEL-DRIVE ELECTRICAL MOTOR VEHICLES**

(30) Priority: 12.11.2015 IT UB20155524
(71) Applicant: Visionar S.r.l., 62010 Montefano (MC) (IT)
(72) Inventor: RANALLI, ANTONIO, 62010 MONTEFANO (MC) (IT); ANDREUCCI, ANDREA, 60027 OSIMO (AN) (IT)
(74) Representative: Cutropia, Gianluigi

(57) **Abstract**

A torque split system (100) for two wheel-drive electrical motor vehicles comprises: a front electrical engine (1) and a rear electrical engine (3) to transmit the motion respectively to a front wheel (2) and to a rear wheel (4), a front power control (13) and a rear power control (11) to power the front engine and the rear engine, detecting means (13a, 11 a, 14a, 15a, 16a, 17a, 18) connected to parts (13, 11, 14, 15, 16, 17, 8) of the vehicle to detect information on the motion of the vehicle, and a control system (20) connected to the detecting means, to the front power control (13) and to the rear power control (11), and configured to send control signals (Of, Or) indicative of the torque split to be made on the two wheels (2, 4) to the power controls (13, 11).

## Description

### Technical Field

The present patent application for industrial invention relates to a torque split system for 2 wheel-drive electrical motor vehicles.

The invention consists in an electronic control system used to split the torque at the front and rear wheels of two-wheel vehicles, in which the wheels are disposed on two axes (i.e. motorcycles). The system comprises an electrical engine that operates on the front wheel and an electrical engine that operates on the rear wheel, in such manner to obtain a two-wheel drive system that gives advantages when driving the vehicle. Driving the vehicle is simple also for non-expert drivers.

### Prior art

The application of traction on both wheels of two-wheel vehicles, such as bicycles, mopeds, scooters and motorcycles, is known in the prior art. Motorized two-wheel vehicles are typically equipped with one internal combustion, hybrid or electrical engine. By means of suitable mechanical parts (shafts, joints, chains, gears), the engine transmits a rotatory motion to the rear wheel.

Equally known, although less typical, is the application of an internal combustion or electrical engine that transmits the motion to the front wheel only. Such a configuration is used by some models of bicycles with assisted pedaling.

Instead, when a two-wheel vehicle is equipped with systems able to transmit the motion generated by one or more engines to both wheels, the system is defined as two-wheel or 2WD drive.

US 3,268,025 describes a vehicle having two wheels, wherein the motion generated by a single internal combustion engine is transmitted to both wheels by means of shafts, chains, crowns and pinions, and the motion is transmitted to the front wheel by means of devices suitable for making steering possible and easier.

US 5,054,572 describes a mechanical system that is different from the one described in US 3,268,025 used to transmit the motion to the front wheel and allow for steering.

US 5,873,428 describes a hydraulic system used to transmit the motion to the front wheel.

US 6,505,699 describes a mechanical system used to transmit the motion from one engine also to the front wheel, with devices that relatively facilitate the application of said system on existing motorcycles.

GB2,265,588 describes a motorcycle with two drive wheels, wherein the hub of each drive wheel comprises an electrical engine.

US 2010/0,224,432 describes a vehicle with two electrical drive wheels that is advantageous in terms of energy consumption, without specifying how the two electrical drive wheels are controlled.

### Purpose of the invention

The purpose of the present invention is to eliminate the drawbacks of the prior art by providing a torque split system for electrical motor vehicles with two drive wheels that is capable of improving the behavior of the vehicle in different road surfaces.

Another purpose of the present invention is to provide such a torque split system that is capable of making the driving of the vehicle easy also for non-expert drivers.

Another object of the present invention is to provide such a torque split system that is accurate, efficient and simple to make and install.

Another object of the present invention is to provide such a torque split system that is inexpensive and capable of providing energy saving.

These purposes are achieved according to the invention with the characteristics claimed in the independent claim 1.

Advantageous embodiments of the invention appear from the dependent claims.

### Brief description of the invention

The torque split system for 2 wheel-drive electrical motor vehicles according to the present invention, comprises:
- a front electrical engine and a rear electrical engine to transmit the motion to a front wheel and to a rear wheel, respectively
- a front power control and a rear power control respectively connected to the front engine and to the rear engine in order to power the front engine and the rear engine,
- detecting means connected to parts of the vehicle in order to detect information on the motion of the vehicle, and
- a control system connected to said detecting means, to the front power control and to the rear power control.

The control system is configured in such manner to receive said information on the motion of the vehicle from the sensors, process said information and send control signals, which are indicative of the torque split to be made on the two wheels, to said power controls.

### Brief description of the drawings

Additional characteristics of the invention will appear clear from the following detailed description that refers to merely illustrative, not limiting, embodiments, which are illustrated in the attached technical drawings, wherein:
Fig. 1 is a diagrammatic side view of a two-wheel vehicle provided with two electrical engines that actuate the wheels;
Figs. 2 and 3 are the same views as Fig. 1, showing two different arrangements of the rear engine that transmits the motion to the rear wheel;
Fig. 4 is a block diagram of the torque split system according to the invention;
Fig. 5 is a block diagram showing the control system of the torque split system of Fig. 4 in detail; and
Fig. 6 is a block diagram showing the final block of the control system of Fig. 5 in detail.

### Detailed description of the invention

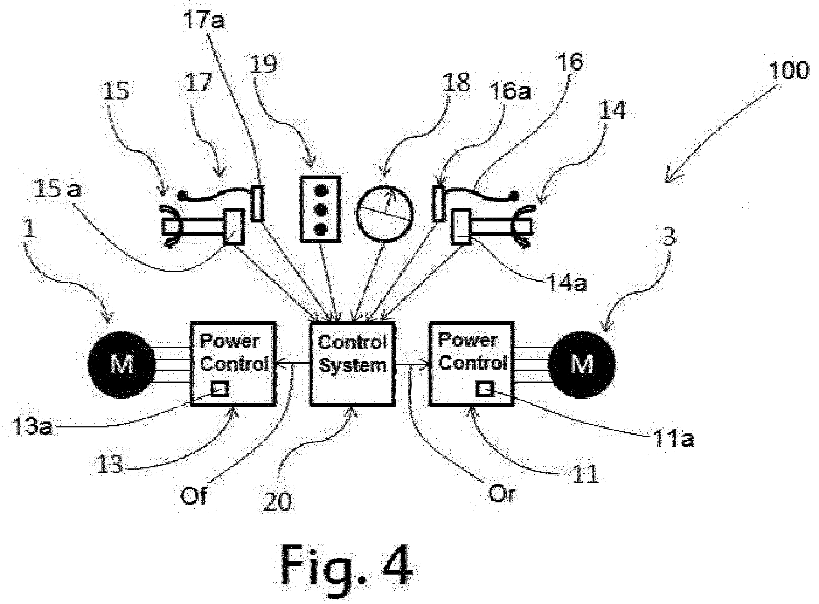

With reference to Fig. 4, the torque split system according to the invention is disclosed, which is generally indicated with reference number (100). The torque split system (100) is applied to motor vehicles provided with two aligned wheels, such as bicycles, scooters, mopeds and motorcycles.

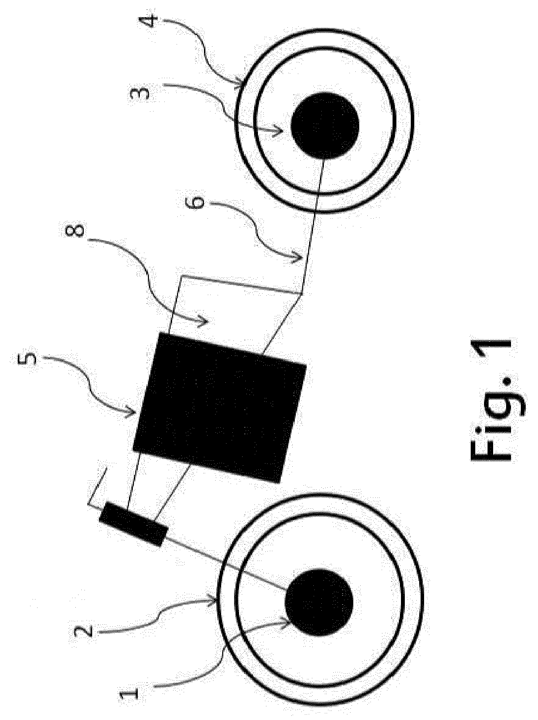

Fig. 1 shows a vehicle with a front wheel (2) and a rear wheel (4). A first electrical engine, hereinafter defined as front engine (1), transmits the motion to the front wheel (2). A second electrical engine, hereinafter defined as rear engine (3), transmits the motion to the rear wheel (4).

The front engine (1) can be of three-phase type with permanent magnets and is disposed in the hub of the front wheel (2) of the vehicle, or in proximity of the hub, to transmit the motion to the front wheel (2) either directly or by means of a series of gears or other mechanical means.

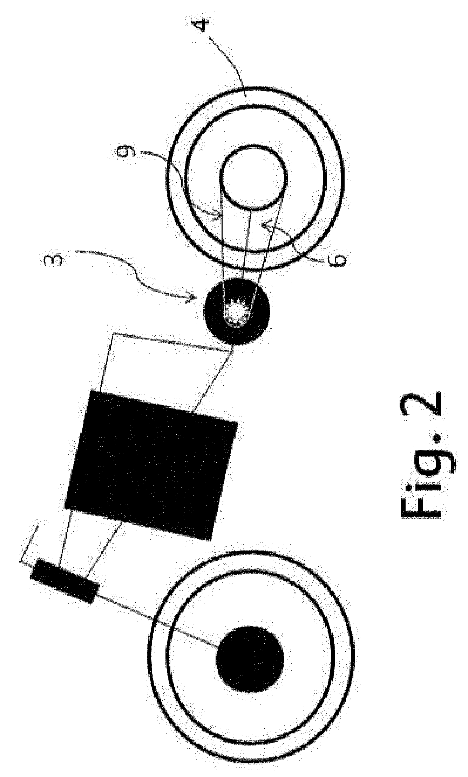

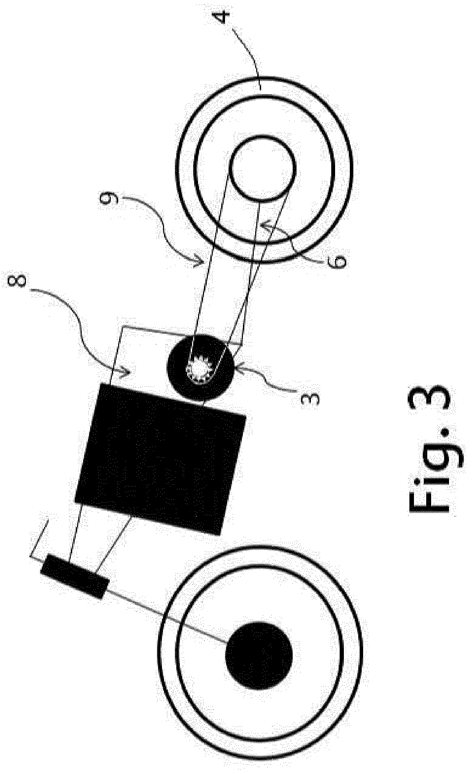

Instead, the positioning of the rear engine (3) depends on the particular type of electrical engine and on the cycling configuration chosen by the vehicle manufacturer. The rear engine (3) can be positioned in the place of or in proximity of the hub of the rear wheel (4), or in a rear oscillating arm (6) (Fig. 2), or inside a body of a frame (8) of the vehicle (Fig. 3).

In the last two cases the rear engine (3) transmits the motion to the rear wheel (4) by means of a transmission system (9) of chain, belt, gear, shaft type or a combination of the same.

With reference to Fig. 4, the electrical engine (1, 3) are connected to power controls (13, 11) comprising programmable electronic devices that carry an electrical current to the engines (1, 3) in such manner to make the drive shafts rotate in a controlled manner.

An electricity accumulation system (5) (Fig. 1) provides the energy that is necessary to actuate the electrical engines to the power controls (11, 13).

For some types of electrical engines, for example for engines with permanent magnets, the power controls (11, 13) receive an input signal representative of the degree of rotation of the accelerator control and are able to provide current to the engine, in such manner that the drive torque developed by the engine is a known function of the accelerator rotation. This type of engine control is called "torque control".

In a vehicle with two drive wheels actuated by two electrical engines, which are typically provided with a single accelerator, the problem consists in how to split the torque at the two wheels.

The torque split system (100) comprises a control system (20) that provides a possible solution to the problem, giving the driver with a tool that is simple to use and can be adjusted to different road surfaces.

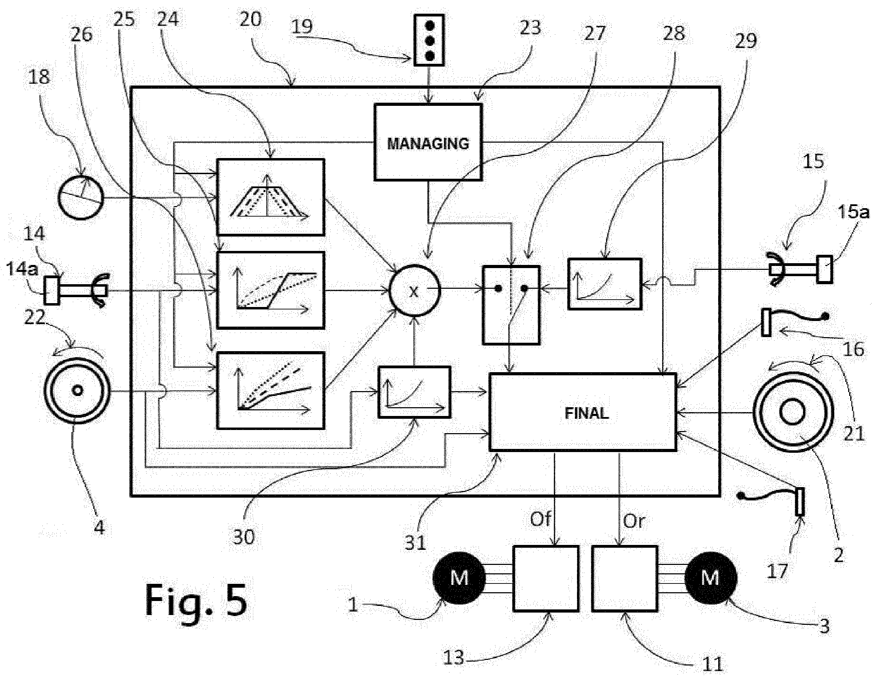

The control system (20) is implemented in a programmable electronic circuit that communicates with the power controls (13, 11) of the front engine (1) and of the rear engine (3). The control system (20) carries out the following functions:
- reads the position of a main accelerator (14), and eventually of a secondary accelerator (15) used to control the front wheel (2) directly,
- receives the angular velocities (21, 22) (Fig. 5) of the two wheels (2, 4) either directly or by means of the power controls,
- receives the data from an inclination sensor (18) that provides at least the inclination angle of the vehicle with respect to its longitudinal axis (angle of roll),
- detects the actuation of the brake levers (16, 17) relative to the two wheels (2, 4) and
- receives the driving mode chosen by the driver for the specific route from a selector (19) that is actuated by the driver.

The inclination sensor (18) is installed in the frame (8) of the vehicle.

The main accelerator (14) and the secondary accelerator (15) comprise accelerator sensors (14a, 15a) intended to detect the angle of rotation of the accelerator requested by the driver.

The selection of the driving mode is important to adjust the response of the engines (1, 3) to the actuation of the main accelerator (14) and of the secondary accelerator (15), if any, according to the driver's preferences and to the type of road surface (paved roads, earth, gravel, sand, rocks, mud, or snow). A first driving mode allows for directly actuating the two engines (1, 3) that operate on the two wheels (2, 4), individually and independently. In this mode, the main accelerator (14) only controls the rear engine (3) that operates on the rear wheel (4), whereas the secondary accelerator (15) only controls the front engine (1) that operates on the front wheel (2). In this way, an expert driver can regulate the torque to be individually given to the two wheels as desired in order to make the necessary maneuvers.

The other driving modes, which can be as many as desired, completely exclude the secondary accelerator (15) in such manner that the two engines (1, 3) are controlled starting from the actuation degree of the main accelerator (14) and from a certain number of rules that limit the actuation of the front engine (1) that operates on the front wheel (2), according to the criteria described in detail hereinafter. These driving modes allow less expert drivers to use the two-wheel drive mode, without having to actuate a second accelerator to control the front wheel.

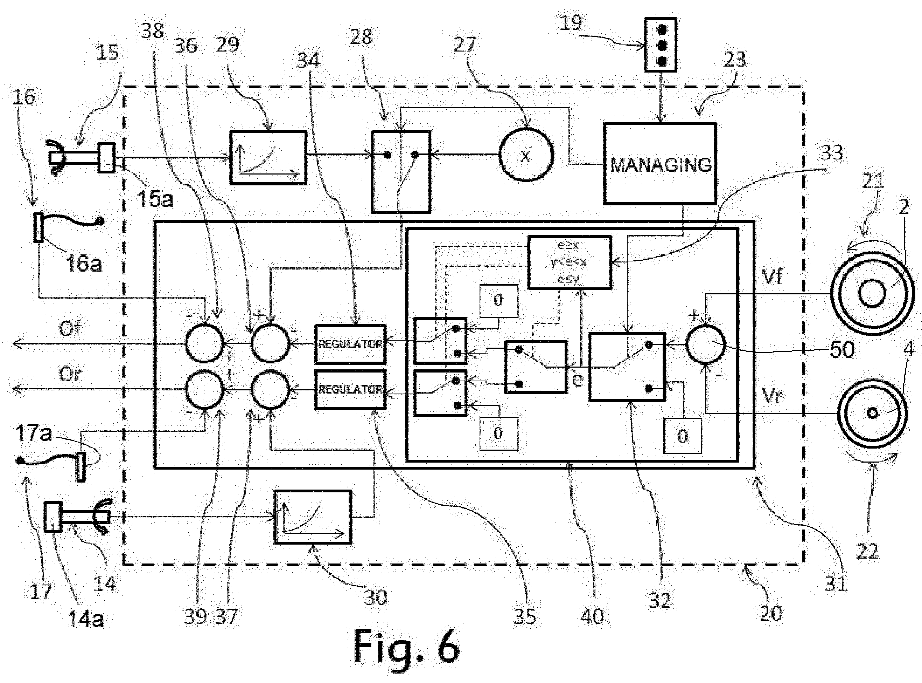

In the driving modes that allow for the coordinated control of the two engines (1, 3) it is also possible to enable the operation of an anti-skid control (40) (Fig. 6) that limits the skidding of the wheels (2, 4), trying to cancel the difference in the peripheral velocity of the wheels.

Regardless of the physical position of the rear engine (3) that operates on the rear wheel (4), when the transmission system (9) with or without change speed gear is known, it is possible to determine the transmission ratio as the value that relates the angular velocity of the drive shaft with the velocity of the wheel.

The same concept applies to the front engine (1) that operates on the front wheel (2) positioned in the hub of the wheel or in proximity to it. These two transmission ratios are known to the control system (20), as well as the nominal diameters of the wheels (2, 4) that are necessary to calculate the peripheral velocities of the wheel from the angular velocity. The angular velocities can be directly measured by means of angular velocity sensors (13a, 11 a) that can consist in suitable sensors disposed on the wheels (2, 4), or by means of calculation systems integrated in the power controls (13, 11).

With reference to Fig. 5, the control system (20) comprises two programmable nonlinearity blocks (29, 30) used to give a non linear response of the accelerators (15, 14) to the opening degree, for instance to avoid sharp starts when actuating the controls.

The control system (20) also comprises three mapping blocks, hereinafter defined as criteria blocks (24, 25, 26). The criteria blocks (24, 25, 26) are used to limit the control signal sent to the front wheel (2). The criteria blocks (24, 25, 26) carry out the mapping operations of the units received as input:
- angular velocity (22) of the rear wheel (4) from the angular velocity sensors (11 a) or by means of calculation system integrated in the power control (11),
- angle of roll of the vehicle from the inclination sensor (18),
- opening degree of the main accelerator (14) from the accelerator sensor (14a).

The outputs of the criteria blocks (24, 25, 26) provide a normalized value between zero and one and are multiplied in a multiplier block (27) in order to simultaneously take into account the contribution of each criterion block.

A managing block (23) is connected to the selector (19) to choose the driving modes, according to the position of the selector (19). The managing block (23) indicates the mapping laws to be used to each criterion block (24, 25, 26).

The definition of the mapping curves implemented in the criteria blocks (24, 25, 26) is decided by the vehicle manufacturer, who can decide, for instance, to reset the control to the front wheel until the main accelerator (14) has reached a certain opening degree, and then shape the rest of the response as desired, giving the maximum response when the main accelerator (14) is completely open.

If the power of the front engine (1) is not sufficient to start the vehicle when standing still, by means of the criterion block (26), the manufacturer can prevent the front engine (1) from being actuated until the vehicle reaches a minimum velocity.

Moreover, by means of the criterion block (24), the manufacturer can decide to reduce a control signal (Of) sent to the power control (13) of the front engine (1) according to the angle of roll of the vehicle detected by the inclination sensor (18). This is done in order to benefit from the traction of the front wheel (2), avoiding sharp movements of the front-wheel drive assembly in low velocity or tight bend conditions.

In addition to being multiplied mutually, the outputs of the criteria blocks (24, 25, 26) are additionally multiplied by means of the multiplier block (27), with the signal coming from the accelerator sensor (14a) of the main accelerator (14), which was eventually made nonlinear by the nonlinearity block (30). At this stage the signal of the main accelerator (14) is limited to generate the control signal (Of) to be sent to the power control (13) of the front engine (1).

A deviator (28) is installed downstream the multiplier block (27), is controlled by the managing block (23) and is connected to the secondary accelerator (15).

The deviator (28) allow for managing the front engine (1):
- directly through the secondary accelerator (15), or
- through the criteria blocks (24, 25, 26).

The signal from the secondary accelerator (15) can be eventually made nonlinear by the nonlinearity block (29).

The control system (20) also comprises a final block (31) that sends torque control signals (Of, Or) to the power control (13) of the front engine (1) and to the power control (11) of the front engine (3), respectively.

With reference to Fig. 6, the final block (31) comprises the anti-skid control (40). The managing block (23) of the driving mode also acts on the final block (31) to activate or deactivate the anti-skid control (40).

The anti-skid control (40) comprises a deviator (32) controlled by the managing block (23). If the anti-skid control (40) is to be deactivated, the deviator (32) sends the zero value to the following stages. On the contrary, if the anti-skid function of the anti-skid control (40) is to be activated, the deviator (32) sends downstream a signal of the difference between the peripheral velocity (Vf) of the front wheel (2) and the peripheral velocity (Vr) of the rear wheel (4) obtained by means of a subtracter (50). Such peripheral velocities (Vf, Vr) are easy to calculate when the angular velocity (21, 22), the wheel diameter and the gear ratios are known.

Such a difference between the peripheral velocities (Vf, Vr) generates an error signal (e). A decision block (33) compares the error signal (e) with preset threshold values (x, y) and sends an appropriate signal to the following stages according to the value of the error signal (e).

If *e*≥*x,* i.e. the peripheral velocity *Vf* of the front wheel (2) is equal to (when x = 0) or higher than the peripheral velocity Vr of the rear wheel (4) by a quantity identified as x, then the error signal (e) is sent to a first regulator (34) by means of a series of deviators controlled by the decision block (33), whereas the zero value is sent to a second regulator (35).

The preset threshold value (y) is negative. Therefore, if *e*≤*y,* being (y) negative, i.e. the peripheral value *Vf* of the front wheel (2) is lower than the peripheral value *Vr* of the rear wheel (4) by a quantity identified as the absolute value of *y*, then the error signal (e) is sent to the second regulator (35), whereas the zero value is sent to the first regulator (34).

Instead, if the value of the error signal (e) is comprised between the *x* and *y* values, both regulators (34) and (35) receive a signal equal to zero, in such manner to carry out no regulation function.

At this level, if enabled, the anti-skid control (40) has carried out its function, either sending a correction contribution to the following stages, or sending the zero value if no correction is requested by the driver through the selection of the driving mode or if no correction was necessary, given the small difference between the peripheral velocities (Vr, Vf) of the two wheels.

The final block (31) also comprises a first and a second differentiator block (36, 37) that take the control signals processed by the other stages and apply a possible correction given by the anti-skid control (40).

A third and a fourth differentiator block (38, 39) attenuate the signals with the contribution of the braking action exercised by the driver on the brake levers (16, 17) that operate on the front wheel (2) and on the rear wheel (4), respectively. Such braking action is measured by suitable brake sensors (16a, 17a).

The first differentiator block (36) is disposed at the output of the first regulator (34) and is connected to the deviator (28) to subtract the error signal (e) from the signal coming from the accelerator sensor (15a) of the secondary accelerator (15) (eventually made non linear by the nonlinearity block (29)) o from the signal coming from said criteria blocks (24, 25, 26) (eventually multiplied by means of the multiplier (27) with the signal coming from the accelerator sensor (14a) of the main accelerator (14)).

The second differentiator block (37) is disposed at the output of the second regulator (35) and is connected to the accelerator sensor (14a) of the main accelerator to subtract the error signal (e) from the signal coming from the accelerator sensor (14a) of the main accelerator (14).

The third differentiator block (38) is disposed at the output of the first differentiator block (36) and is connected to the brake sensor (16a) of the front brake lever to subtract a braking signal coming from the brake sensor (16a) of the front brake lever from the outgoing signal from the first differentiator block (36).

The fourth differentiator block (39) is disposed at the output of the second differentiator block (37) and is connected to the brake sensor (17a) of the rear brake lever to subtract a braking signal coming from the brake sensor (17a) of the rear brake lever from the outgoing signal from the second differentiator block (37).

It must be considered that the system (100) of the invention comprises: the two engines (1, 3), the two power controls (13, 11), the control system (20), the sensors (11 a, 13a, 14a, 15a, 16a, 17a, 18) and the selector (19).

At the output of the third and fourth differentiator block (38, 39), the control signals (Of, Or) for the power controls (13, 11), which are representative of the torque requested from the two electrical engines (1, 3), are completely generated.

Numerous variations and modifications can be made to the present embodiments of the invention, within the reach of an expert of the field, while still falling within the scope of the invention.

## Claims

1. Torque split system (100) for two-wheel drive electrical motor vehicles comprising:
- a front electrical engine (1) and a rear electrical engine (3) to transmit the motion to a front wheel (2) and a rear wheel (4), respectively
- a front power control (13) and a rear power control (11) respectively connected to the front engine (1) and to the rear engine (3) to power the front engine and the rear engine,
- detecting means (13a, 11 a, 14a, 15a, 16a, 17a, 18) connected to parts (13, 11, 14, 15, 16, 17, 8) of the vehicle to detect information on the vehicle motion, and
- a control system (20) connected to said detecting means (13a, 11 a, 14a, 15a, 16a, 17a, 18), to the front power control (13) and to the rear power control (11), said control system (20) being configured to receive said information on the vehicle motion from the detecting means, process said information and send control signals (Of, Or) indicative of the torque split to be made on the two wheels (2, 4) to said power controls (13, 11).

2. The system (100) of claim 1, wherein said detecting elements comprise one or more of the following sensors:
- angular velocity sensors (13a, 11 a) to detect the angular velocity of the front wheel (2) and of the rear wheel (4),
- accelerator sensors (14a, 15a) installed in a main accelerator (14) of the rear engine (3) and/or in a secondary accelerator (15) of the front engine (1) to detect the angle of rotation of the main accelerator (14) and/or of the secondary accelerator (15),
- brake sensors (16a, 17a) installed in a front brake lever (16) and in a rear brake lever (17) to detect the braking level of the front and rear brakes,
- an inclination sensor (18) disposed in the frame (8) of the vehicle to detect the angle of roll of the vehicle.

3. The system (100) of claim 1 or 2, comprising a selector (19) actuated by the user to select the desired driving mode; said control system (20) comprising a managing block (23) connected to the selector (19) to manage the driving mode selected by the user.

4. The system (100) of claim 3, when depending on claim 2, wherein said control system (20) comprises three criteria blocks (24, 25, 26) connected to said managing block (23) and respectively to said inclination sensor (18), said accelerator sensor (14a) of the main accelerator and said angular velocity sensors (11 a) of the rear wheel (4), said criteria blocks (24, 25, 26) being configured to map the input values received from said sensors (18, 14a, 11 a), according to the driving mode chosen by the user with the selector (19).

5. The system (100) of claim 4, also comprising a deviator (28) connected to said criteria blocks (24, 25, 26), to said accelerator sensor (15a) of the secondary accelerator (15) and to said front power control (13); said deviator (28) being connected to said managing block (23) in such manner that the user can actuate the deviator by means of the selector (19) to manage the front engine (1) directly with the secondary accelerator (15) or with the criteria blocks (24, 25, 26).

6. The system (100) of claim 5, comprising a multiplier (27) that multiplies the outputs of said criteria blocks (24, 25, 26) with the signal coming from said accelerator sensor (14a) of the main accelerator and the output signal from said multiplier (27) is sent to the deviator (28).

7. The system (100) of any one of claim 2 to 6, also comprising a first nonlinearity block (30) connected to said accelerator sensor (14a) of the main accelerator (14) and a second nonlinearity block (29) connected to said accelerator sensor (15a) of the secondary accelerator (15) to make the signals from the accelerator sensors (14a, 15a) non linear.

8. The system (100) of any one of claims 2 to 7, also comprising a final block (31) comprising an anti-skid control (40) receiving as input the peripheral velocities (Vf, Vr) of the front wheel and of the rear wheel detected by said angular velocity sensors (13a, 11 a); said anti-skid control (40) comprising:
- a subtracter (50) that makes a difference between the peripheral velocities (Vf, Vr) of the front wheel and of the rear wheel in order to obtain an error signal (e);
- a comparator (33) that compares the error signal (e) with preset threshold values (x, y) and according to the comparison corrects the control signals (Of, Or) to be sent to said power controls (13, 11) in order to split the torque on the two wheels (2, 4).

9. The system (100) of claim 8, wherein said anti-skid control (40) is connected to said managing block (23) so that the user can activate or deactivate the anti-skid control (40) with the selector (19).

10. The system (100) of claim 8 or 9, wherein said final block (31) comprises:
- a first regulator (34) connected to said comparator (33) to receive the error value (e) when the difference between the peripheral velocity (Vf) of the front wheel and the peripheral velocity (Vr) of the rear wheel is higher than a preset threshold value (x), and
- a second regulator (35) connected to said comparator (33) to receive the error value (e) when the difference between the peripheral velocity (Vf) of the front wheel and the peripheral velocity (Vr) of the rear wheel is lower than a preset threshold value (y), wherein said preset threshold value (y) is a negative value.

11. The system (100) according to claim 10, wherein said final block (31) comprises:
- a first differentiator block (36) disposed at the output of the first regulator (34) and connected to said deviator (28) in order to subtract the error signal (e) from the signal coming from said accelerator sensor (15a) of the secondary accelerator (15) or from the signal coming from said criteria blocks (24, 25, 26), and
- a second differentiator block (37) disposed at the output of the second regulator (35) and connected to the accelerator sensor (14a) of the main accelerator to subtract the error signal (e) from the signal coming from the accelerator sensor (14a) of the main accelerator (14).

12. The system (100) of claim 11, wherein said final block (31) comprises:
- a third differentiator block (38) disposed at the output of the first differentiator block (36) and connected to the brake sensor (16a) of the front brake lever to subtract a braking signal coming from said brake sensor (16a) of the front brake lever from the outgoing signal from said first differentiator block (36), and
- a fourth differentiator block (39) disposed at the output of the second differentiator block (37) and connected to said brake sensor (17a) of the front brake lever to subtract a braking signal coming from said brake sensor (17a) of the rear brake lever from the outgoing signal from said second differentiator block (37).
